# EUROPEAN PATENT SPECIFICATION

(11) **EP 0 792 105 B1**
(45) Date of publication and mention of the grant of the patent: **19.06.2002**
(21) Application number: 95937955.3
(22) Date of filing: 20.11.1995
(51) Int. Cl.: A23C 19/16, A23C 19/09

(54) **CHEESE-BASED FOOD PRODUCT**
NAHRUNGSMITTEL AUF BASIS VON KÄSE
PRODUIT ALIMENTAIRE A BASE DE FROMAGE

(30) Priority: 18.11.1994 GB 9423426
(43) Date of publication of application: 03.09.1997
(73) Proprietor: MORELEIGH LTD., Douglas, Isle of Man (GB)
(72) Inventor: OVERTON, Bruce Stuart, Pereklisia, Limmasol (CY)
(74) Representative: Harman, Michael Godfrey
(86) International application number: GB9502715
(87) International publication number: WO9615680

(56) References cited:
- FR-A- 2 556 565
- GB-A- 678 443
- DATABASE FSTA INTERNATIONAL FOOD INFORMATION SERVICE (IFIS), FRANFURT/MAIN, DE 87(02):G0035, 1987 ANON. 'Convenience not cost the deciding factor' & POPULAR FOODSERVICE , vol. 6, 1986 page 57,59-61
- DAIRY INDUSTRIES INTERNATIONAL, vol. 51, no. 4, pages 27-31, ANON. 'Enthusiasm at London's chilled food fair '
- FOOD MANUFACTURE , vol. 64, no. 4, 1989 pages 77-79, ANON. 'Looking for Cheddar'
- QUICK FROZEN FOODS INTERNATIONAL , no. 4, 1995 page 64,67 ANON. 'Why little Denmark holds second place in international food consumption'

## Description

The present invention relates to food products, and more specifically to cheese-based products.

Cheese, the solid part of curdled milk, has been known for millennia. There is a very great variety of different cheeses, made in slightly different ways and using various different milks (the usual milk is cow milk, but other milks, such as goats', sheep, and mares' milk, are also used).

Cheese is primarily consumed as a distinct product, either alone or together with other foods, such as bread and cheese. However, cheese is also an important ingredient in cooking, as a constituent and flavouring of cooked dishes.

Traditionally, cooking has normally be used to prepare food for immediate consumption while still hot, or to a lesser extent for later consumption when cold. Recently, however, the market for convenience foods has become very large. Such foods are prepared by large manufacturers, usually with cooking steps being involved, and are then sold cold for the consumer to reheat, the reheating by the consumer requiring little or no processing of the food beyond its simple heating. The heating by the consumer may for example involve immersion in boiling water, frying (either in a pan or in deep oil), or heating in a normal (radiant and convection) oven or a microwave cooker.

One popular form of convenience food is the "fish finger". In its standard form, a fish finger is a finger-like portion of fish (either cut from a single fish or formed from reconstituted fish flesh), typically of the order of 100 mm long and 10-20 mm square, coated with batter and breadcrumbs. The fish finger is processed cooked by the manufacturer at least to the extent that it is flash fried before freezing; the consumer reheats it and completes its cooking. The principle of the fish finger has been extended to similar "fingers" of a variety of other foods, primarily of a savoury nature.

The term "finger" is a convenient term to use for such products, but it will of course be realized that such "fingers" do not have to be of the size or shape of the standard or traditional fish fingers. Traditional "fingers" are of of a relatively thin and extended form, but similar products can also be of other sizes and shapes which are of extended form. For convenience, the term "fingers" will be used here for such shapes even though they might also be described by such terms as "bites", "nibbles", or "nuggets".

We have realized that there is a need for cheese-based fingers.

Some attempts have been made in the past to produce cheese-based fingers. However, considerable difficulties have been encountered, because of certain characteristics of cheese. Specifically, when cheese is heated, it becomes soft, to the extent that a finger of cheese cannot maintain its integrity, but slumps or even melts. The result is that it is difficult to produce a cheese finger, and even if a cheese finger is successfully produced (eg by minimizing the heating which it undergoes during manufacture), it cannot be successfully reheated by the consumer.

The extent to which cheese has been usable in convenience foods has therefore been seriously constrained. Such foods, particularly in the form of fingers, have been able to utilize cheese only in combination with other ingredients which give the finger sufficient strength to retain its shape even when it is reheated by the consumer.

Certain special types of cheese are known which retain their physical integrity when cooked. One such type of cheese is Halloumi, originating in and produced in Cyprus (although the name has also been used for similar cheeses produced in other countries). It is traditionally made from goats' milk, although similar cheeses can also be produced from other types of milk, such as cows' or sheep milk.

Halloumi cheese has an unusual property among cheeses, probably resulting at least partially from the way in which it is made. It retains its physical integrity during cooking so that it substantially retains its shape, instead of becoming so soft that it would (like other cheeses) slump or melt into a low viscosity liquid. It thus resists oven baking, grilling, frying, and even microwaving.

Halloumi cheese and other such cheeses with similar properties would therefore appear suitable for making cheese-based fingers. However, there are considerable practical difficulties in making cheese-based fingers from Halloumi-type cheese on an industrial scale.

Halloumi cheese is made in small blocks of around 200-250 g, and after the curd is made, it is immersed in very hot water; this kills off the spores and has a cooking effect on the protein. The cheese is then cooled and immersed in brine. It is difficult to scale up the manufacture of the basic Halloumi cheese from the conventional size to, say, 7 or 8 kg (a more desirable size for industrial scale processing and manufacture), because the salt does not penetrate satisfactorily to the centre of the block during the brining step.

We have also found that even if a smaller block size is used, there is a further problem. The block shrinks during the boiling step and expands again during the brining step, and the final size (ie dimensions) of the block are very variable. So if the block manufacture is adjusted to ensure that the blocks are of a defined minimum size for subsequent processing, most of the blocks will in fact be substantially over-sized. Trimming them to size would therefore result in considerable waste, and the resulting fingers would be of variable weight.

Finally, we have found it impossible to combine blocks of conventional size. Many ordinary cheeses can be reconstituted by pressure. However, if blocks of Halloumi cheese are passed through say an extrusion or moulding machine, they do not knit together; the resulting material lacks coherence, end will not form satisfactory fingers.

It has therefore, not been feasible to make cheese-based fingers on an industrial scale from Halloumi-type cheese.

The present invention consists broadly of a convenience food product of the finger type having as its major constituent a Halloumi-type cheese which is finely grated and re-formed, preferably with a binder, and of the manufacture of such a food. The present cheese fingers can of course be of the traditional "fish finger" shape and approximately the same sort of size, but can also be of other sizes and shapes which are of extended form, such as "bites", "nibbles", or "nuggets".

One form of the present cheese fingers are preferably made as follows. The Halloumi cheese is grated by a grating machine into fine particles; it is useful for the cheese to be chilled during this process. In particular, a Comitrol type machine may be used. It is desirable for the size of the particles to be of the order of 1 mm or less; with a particle size of 1.5 mm (1/16"), we have found difficulty in forming satisfactory fingers.

The cheese particles are mixed with a suitable binder, such as egg albumen or food starch, which aids in maintaining the integrity of the finger during the subsequent processing. The mixture is then formed into fingers of any desired shape, eg true finger shapes, nuggets, cubes, round balls, etc. The fingers are then passed through a batter enrober machine in which they are coated with an adhesive batter mix and any excess batter mix is blown off. They are then passed to a breading machine where the battered pieces are coated with breadcrumbs or similar crumb material. If desired, a triple coating system of batter, crumb, and batter can be used.

At this stage the crumb coated fingers will normally be flash fried (by either shallow or deep frying) at around 190° C for around 30 s. They will then be chilled or frozen for storage and distribution to food retailers. However, the frying stage may be omitted, with the fingers being chilled or frozen directly from the breading machine, particularly if oiled breadcrumbs have been used.

When these cheese fingers are to be consumed by the consumer, they are heated and subjected to a final cooking, and are then ready for eating. This cooking may be by oven baking, grilling, frying (deep or shallow), or microwaving; they are then ready for eating. As discussed above, the fingers retain their shape during this final heating and cooking.

Although the present cheese fingers contain cheese as a major ingredient and in substantially its original form (ie not subjected to a major cooking operation before being incorporated into the fingers), other edible products can of course be included together with the cheese, to give different and added flavours. Halloumi cheese has a relatively mild flavour, so the addition of other food material with a distinctive flavour will result in fingers in which the flavour of the further food material is predominant.

The added edible products can for example consist of ham, onion, or fish. Thus slices of ham can be included in the fingers, either adjacent to the cheese or sandwiched between pieces of the cheese. Alternatively, chopped or grated ham can be mixed with the cheese material.

In a second important form of the present cheese fingers, another form of cheese (ie a non-Halloumi-type cheese), such as Cheddar cheese, is mixed with the Halloumi-type cheese. This mixture may then be prepared and treated as described above.

We have found that the introduction of such a non-Halloumi-type cheese, preferably in a proportion less than the proportion of the Halloumi-type cheese, acts somewhat as a catalyst in helping to bind the particles of Halloumi-type cheese together. We have found that such a mixture of cheese types has substantial coherency without the need to add a binder (such as egg albumen or food starch). We have also found that the particle size can be increased, to up to around 3 mm; this results in less loss of texture than with a smaller particle size.

Further, since Halloumi cheeses are generally relatively mild, the addition of another, stronger non-Halloumi-type cheese results in a stronger flavour. If the added cheese is a strong Cheddar, for example, the result is a finger with a soft "bite" and a stronger cheese flavour than Halloumi alone can give. If Mozzarella is used instead, the result has a light, firm, and somewhat stringy texture. In particular, we have found a mixture of around 5 parts Halloumi, 1 part Cheddar, and 1 part Mozzarella gives a finger of satisfactory consistency and agreeable taste.

## Claims

1. A convenience food product of the finger type having as its major constituent a Halloumi-type cheese which is grated and re-formed.

2. A food product according to claim 1 including a binder.

3. A food product according to either previous claim also including at least one non-cheese ingredient.

4. A food product according to any previous claim including at least one non-Halloumi type cheese ingredient.

5. A food product according to either of claims 3 and 4 wherein the additional ingredient is in chopped or grated form.

6. A food product according to either of claims 3 and 4 wherein the additional ingredient is in sliced form.

7. A method of making the food product of claim 2 or any claim dependent thereon (directly or indirectly), comprising grinding the Halloumi-type cheese to a size of not substantially greater than 1 mm under chilled conditions, mixing the ground cheese paricles with a binder, forming the mixture into fingers of any desired shape, and passing the fingers successively through a batter enrober machine and a breading machine, and chilling or freezing the fingers for distribution.

## Patentansprüche

1. Besonderes Nahrungsmittelprodukt in Form eines Fingers, das hauptsächlich aus Käse der Halloumi-Art besteht, der zerkleinert und umgeformt ist.

2. Nahrungsmittelprodukt nach Anspruch 1, welches einen Binder aufweist.

3. Nahrungsmittelprodukt nach einem der vorhergehenden Ansprüche, welches außerdem wenigstens einen nicht aus Käse bestehenden Bestandteil aufweist.

4. Nahrungsmittelprodukt nach einem der vorhergehenden Ansprüche, welches wenigstens einen Bestandteil aufweist, der kein Käse der Halloumi-Art ist.

5. Nahrungsmittelprodukt nach einem der Ansprüche 3 und 4, bei welchem der zusätzliche Bestandteil in gehackter oder zerkleinerter Form vorhanden ist.

6. Nahrungsmittelprodukt nach den Ansprüchen 3 und 4, bei welchem der zusätzliche Bestandteil in geschnittener Form vorliegt.

7. Verfahren zur Herstellung des Nahrungsmittelproduktes nach Anspruch 2 oder einem hiervon (direkt oder indirekt) abhängigen Anspruch, bei welchem Käse der Halloumi-Art auf eine Partikelgröße von nicht wesentlich größer als 1 mm unter erkalteten Bedingungen gemahlen wird und die gemahlenen Käsepartikel mit einem Binder zusammengebracht werden, worauf dlese Mischung in Fingerform irgendeiner gewünschten Gestalt gebracht wird und die Finger nacheinander durch eine Teig-Überzugsmaschine und eine Brotkrümel-Überzugemaschine geschickt werden und die Finger abgekühlt oder gefroren werden, um sie dann einer Verteilung zuzuführen.

## Revendications

1. Produit alimentaire prêt-à-servir de type bâtonnet contenant, en tant que constituant principal, du fromage de type Halloumi qui est râpé et reconstitué.

2. Produit alimentaire selon la revendication 1, comprenant un liant.

3. Produit alimentaire selon l'une quelconque des revendications précédentes, comprenant également au moins un ingrédient autre que du fromage.

4. Produit alimentaire selon l'une quelconque des revendications précédentes, comprenant au moins un ingrédient autre que du fromage de type Halloumi.

5. Produit alimentaire selon l'une quelconque des revendications 3 et 4, dans lequel l'ingrédient supplémentaire est sous forme râpée ou hachée.

6. Produit alimentaire selon l'une quelconque des revendications 3 et 4, dans lequel l'ingrédient supplémentaire est sous forme de tranches.

7. Procédé de préparation du produit alimentaire de la revendication 2 ou de l'une quelconque des revendications qui en dépendent (directement ou indirectement), comprenant les étapes consistant à réduire le fromage de type Halloumi en poudre, à une taille ne dépassant pas sensiblement 1 mm, dans des conditions de refroidissement, à mélanger les particules de fromage réduites en poudre avec un liant, à mettre ce mélange sous forme de bâtonnets à la forme quelconque souhaitée, à faire passer ces bâtonnets successivement au travers d'une enrobeuse de pâte à frire et d'une paneuse et à rafraîchir ou refroidir ces bâtonnets pour la distribution.
